# FASCICULE DE BREVET EUROPEEN

(11) **EP 4 063 751 B1**
(45) Date de publication et mention de la délivrance du brevet: **26.03.2025**
(21) Numéro de dépôt: 22163315.9
(22) Date de dépôt: 21.03.2022
(51) Int. Cl.: F24F 3/044, F24F 3/16, F24F 7/06, F24F 11/00, F24F 13/02, F24F 13/10, F24F 110/65, F24F 110/66, F24F 120/10

(54) **PROCEDE DE PILOTAGE D'UN SYSTEME DE VENTILATION, CHAUFFAGE, CLIMATISATION ET/OU PURIFICATION**
VERFAHREN ZUR STEUERUNG EINES LÜFTUNGS-, HEIZUNGS-, KLIMATISIERUNGS- UND/ODER LUFTREINIGUNGSSYSTEMS
METHOD FOR CONTROLLING A SYSTEM FOR VENTILATION, HEATING, AIR-CONDITIONING AND/OR PURIFICATION

(30) Priorité: 22.03.2021 FR 2102846
(43) Date de publication de la demande: 28.09.2022
(73) Titulaire: Atlantic Climatisation et Traitement d'Air Industrie, 69330 Meyzieu (FR)
(72) Inventeur: AUCOUTURIER, Vincent, 69007 LYON (FR); MARZIN, Sina, 91400 ORSAY (FR); HUSCENOT, Jeremie, 69740 GENAS (FR)
(74) Mandataire: Plasseraud IP

(56) Documents cités:
- EP-A1- 3 767 194
- WO-A2-2007/110505
- FR-A1- 3 082 288

## Description

### Domaine technique

L'invention se rapporte à un procédé de pilotage d'un système de ventilation, chauffage, climatisation et/ou purification de plusieurs zones d'un local, notamment un local du secteur tertiaire.

### Technique antérieure

Dans un local, notamment un local du secteur tertiaire, le maintien d'un niveau de qualité d'air optimal est nécessaire afin d'assurer un niveau de confort et de santé satisfaisants des occupants dudit local. Le niveau de qualité d'air est souvent imposé par la réglementation des locaux du secteur tertiaire, tel le règlement sanitaire départemental type (RSDT). En particulier, les RSDT fixent des valeurs limites que certains polluants de l'air intérieur du local ne doivent pas dépasser afin de garantir le confort et la santé des occupants. De même, l'Organisation Mondiale de la Santé (OMS) définit des seuils que les polluants de l'air intérieur ne doivent pas dépasser afin de préserver la santé des occupants. Ces seuils peuvent être fixés à des niveaux différents. Ceux définis par l'OMS sont plus ambitieux que les valeurs limites établies dans les RSDT.

De manière connue, le maintien de la qualité d'air est réalisé à partir d'un procédé comprenant une extraction du local d'un air vicié et une introduction dans le local d'un air neuf provenant d'un extérieur du local. Un volume d'air neuf introduit dans le local peut être égal à un volume d'air vicié extrait du local, notamment lorsqu'une centrale double flux est employée pour introduire et extraire l'air neuf et l'air vicié. Alternativement, le volume d'air neuf insufflé dans le local peut être différent au volume d'air vicié extrait, notamment lorsqu'une centrale double flux est réglée comme telle.

FR 3082288 A1 divulgue un dispositif de ventilation pour la ventilation et le chauffage ou la climatisation de l'espace intérieur d'une construction. EP 3767194 A1 divulgue un organe de régulation d'un flux d'air.

L'introduction permanente d'air neuf dans le local induit cependant des déperditions énergétiques importantes, le procédé étant donc très consommateur d'énergie.

Le but de l'invention est de proposer un procédé qui remédie à cet inconvénient.

### Résumé

À cet effet, l'invention a pour objet un procédé de pilotage d'un système de ventilation, chauffage, climatisation et/ou purification de plusieurs zones d'un local, ledit système comprenant au moins un organe de régulation de flux d'air et un dispositif de traitement thermique de flux d'air et/ou un dispositif de traitement de purification de flux d'air circulant dans ledit système, le système comprenant en outre un dispositif de ventilation, l'organe de régulation comportant un caisson comprenant :
- une entrée adaptée pour recevoir un flux d'air, dit air neuf, depuis le dispositif de ventilation, dite première entrée,
- une entrée adaptée pour recevoir un flux d'air, dit air recyclé, depuis le dispositif de traitement thermique et/ou du dispositif de traitement de purification de flux d'air, dite deuxième entrée,
- une pluralité d'embouchures adaptées pour être chacune connectée à une gaine respective du système pour amener un flux d'air dans une zone respective du local, chaque embouchure étant associée à au moins une zone respective du local, chaque embouchure comprenant :
   - une première portion reliée fluidiquement à la première entrée et formant une première sortie d'air,
   - une deuxième portion reliée fluidiquement à la deuxième entrée et formant une deuxième sortie d'air,

l'organe comportant en outre, pour chacune des embouchures, un dispositif de régulation d'un débit d'air neuf, appelé premier dispositif de régulation, disposé dans la première sortie d'air, le premier dispositif de régulation étant mobile entre une position de fermeture complète de la première sortie d'air et une position d'ouverture complète de la première sortie d'air,
le procédé étant caractérisé en ce qu'il comprend les étapes suivantes :
   - comparaison d'une valeur d'au moins un paramètre, dite valeur de paramètre, relatif à au moins un constituant d'un air, à une valeur donnée, dite valeur de comparaison, dans chacune des zones, et
si un ratio, dit ratio de pollution, de ladite valeur de paramètre sur ladite valeur de comparaison est supérieur ou égal à une valeur égale à 1, dite valeur unitaire, dans au moins l'une des zones, dite zone polluée,
   - augmentation du débit d'air neuf par ledit premier dispositif de régulation de l'embouchure associée à ladite au moins une zone polluée, et/ou
   - augmentation d'un débit d'air recyclé traversant l'embouchure associée à ladite au moins une zone polluée.

Ainsi, grâce au procédé selon la présente invention, il est possible d'améliorer la qualité d'air dans la zone polluée du local à partir de l'augmentation du débit d'air neuf mais aussi de l'augmentation du débit d'air recyclé. Ainsi, la quantité d'air neuf à insuffler dans le local depuis l'extérieur diminue, ce qui permet de limiter les déperditions énergétiques.

Selon une autre caractéristique de l'invention, l'étape d'augmentation du débit d'air recyclé comprend une activation d'un dispositif de régulation du débit d'air recyclé, appelé deuxième dispositif de régulation, disposé dans la deuxième sortie d'air, le deuxième dispositif de régulation étant mobile entre une position de fermeture complète de la deuxième sortie d'air et une position d'ouverture complète de la deuxième sortie d'air.

Selon une autre caractéristique de l'invention, au cours de l'étape d'augmentation du débit d'air recyclé traversant l'embouchure associée à ladite au moins une zone polluée, le deuxième dispositif de régulation de ladite embouchure associée à ladite au moins une zone polluée se déplace de manière à augmenter une section de la deuxième sortie d'air de ladite embouchure associée à ladite au moins une zone polluée, et/ou les deuxièmes dispositifs de régulation des zones non polluées se déplacent de manière à réduire une section des deuxièmes sorties d'air respectives.

Selon une autre caractéristique de l'invention, au cours de l'étape d'augmentation du débit d'air neuf par ledit premier dispositif de régulation de l'embouchure associée à la dite au moins une zone polluée, le premier dispositif de régulation de la dite au moins une zone polluée se déplace de manière à augmenter une section de la première sortie d'air de ladite embouchure associée à ladite au moins une zone polluée, et/ou les premiers dispositifs de régulation des zones non polluées se déplacent de manière à réduire une section des premières sorties d'air respectives.

Selon une autre caractéristique de l'invention, l'étape d'augmentation du débit d'air neuf par ledit premier dispositif de régulation de l'embouchure associée à ladite au moins une zone polluée dure jusqu'à ce que le ratio de pollution soit inférieur à la valeur unitaire dans la zone polluée.

Selon une autre caractéristique de l'invention, l'augmentation du débit d'air recyclé et/ou l'augmentation du débit d'air neuf est corrélée à la valeur du ratio de pollution.

Selon une autre caractéristique de l'invention, un débit d'air neuf en entrée de l'organe de régulation, dit débit d'air neuf global, est maintenu constant
Selon une autre caractéristique de l'invention, un débit d'air neuf en entrée de l'organe de régulation, dit débit d'air neuf global, est variable.

Selon une autre caractéristique de l'invention, ledit au moins un constituant de l'air est choisi parmi :
- un ou plusieurs composé(s) inorganique(s), et/ou
- un ou plusieurs composé(s) organique(s) volatil(s), et/ou
- un ou plusieurs composé(s) organique(s) semi-volatil(s), et/ou
- particules, et/ou
- microorganismes, et/ou
- une vapeur d'eau dans la zone polluée à une température donnée.

Selon une autre caractéristique de l'invention, lorsque le ratio de pollution est supérieur à la valeur unitaire pour au moins deux constituants de l'air, un ordre de priorité est établi entre les au moins deux constituants de l'air, une valeur de l'augmentation du débit d'air neuf et/ou du débit d'air recyclé dépendant dudit ordre de priorité.

Selon une autre caractéristique de l'invention, l'ordre de priorité est établi en fonction d'un écart absolu entre le ratio de pollution et la valeur unitaire pour chaque constituant de l'air, et/ou d'une nature de chaque constituant de l'air, et/ou d'une détection d'une présence humaine dans la zone polluée.

Selon une autre caractéristique de l'invention, la deuxième sortie d'air de chaque embouchure fournit un débit d'air recyclé à la ou les zones respectives du local pendant des plages horaires définies.

### Brève description des dessins

D'autres caractéristiques, détails et avantages de l'invention apparaîtront encore à la lecture de la description qui va suivre. Celle-ci est purement illustrative et doit être lue en regard des dessins annexés sur lesquels :
**Fig. 1**

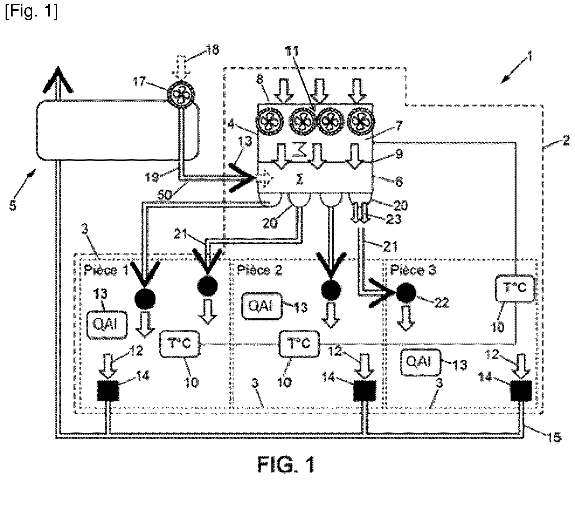

   [Fig. 1] illustre schématiquement un exemple de système de ventilation, chauffage, climatisation et/ou purification d'un local piloté par un procédé selon la présente invention;
**Fig. 2**

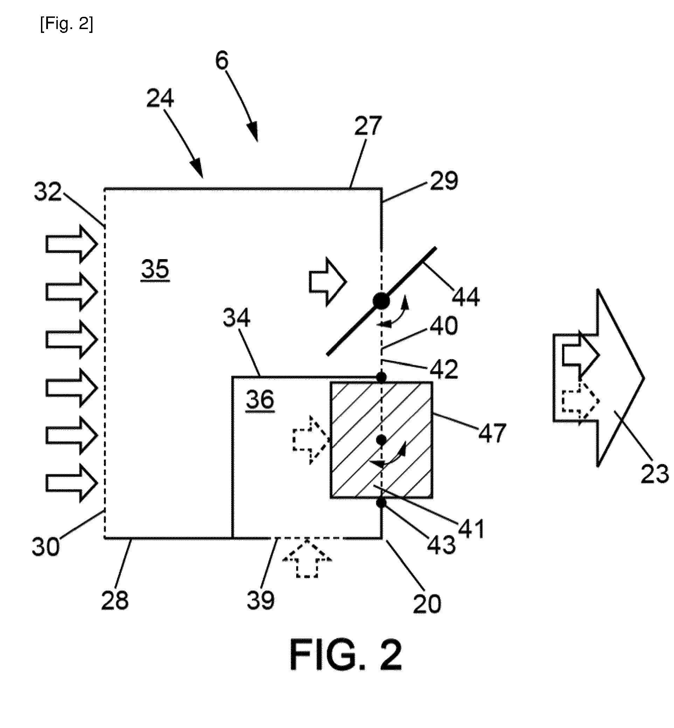

   [Fig. 2] illustre une vue schématique fonctionnelle en coupe transversale d'un organe de régulation de flux d'air du système de la figure 1;
**Fig. 3**

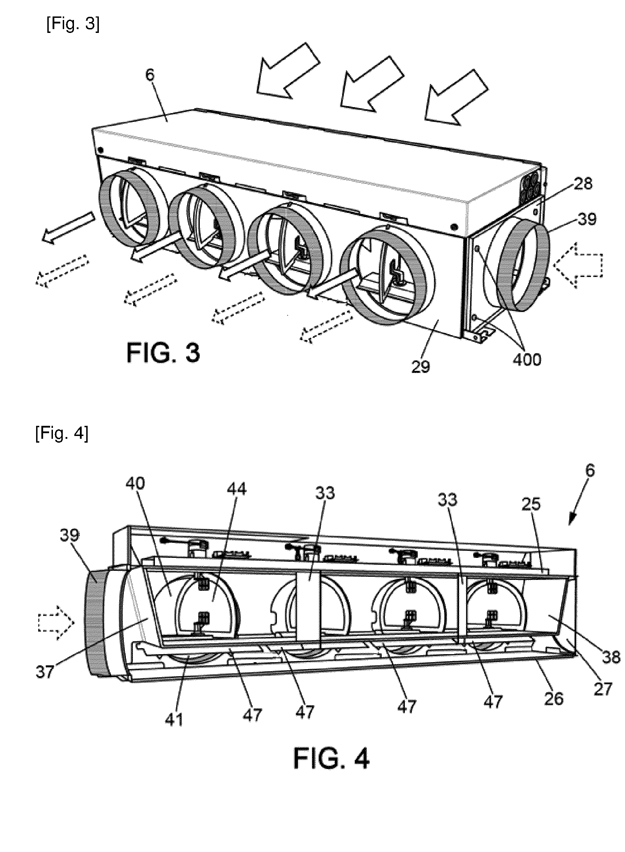

   [Fig. 3] illustre une vue en perspective de l'organe de régulation de flux d'air de la figure 2, tourné vers la face avant de l'organe;
**Fig. 4**
   [Fig. 4] illustre une vue en perspective partielle de l'organe de régulation de flux d'air de la figure 3;
**Fig. 5**

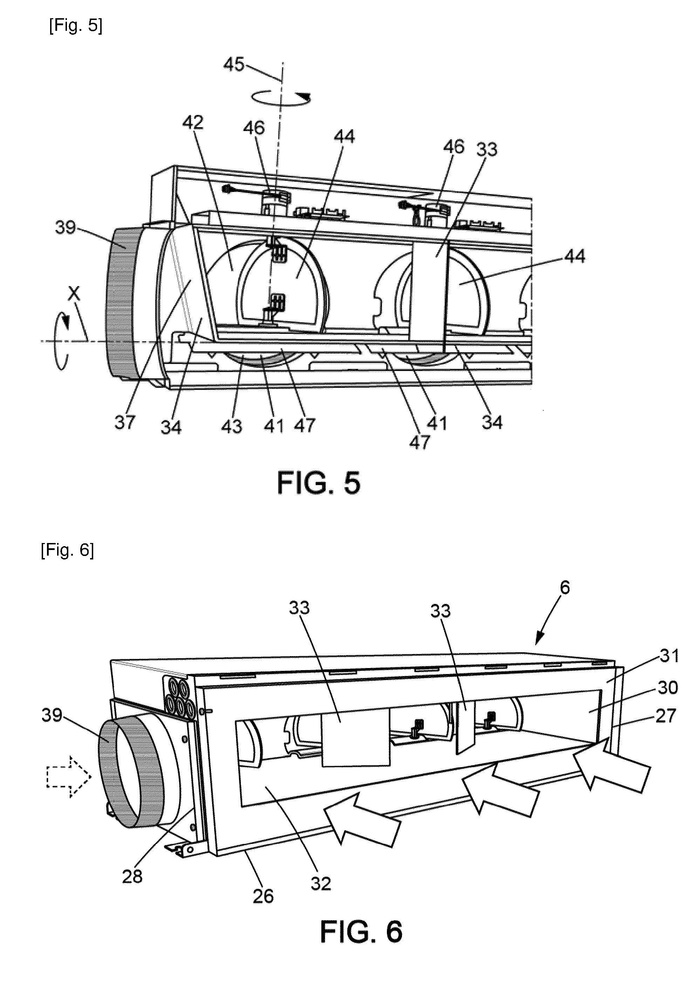

   [Fig. 5] est une vue agrandie d'un détail de la figure 4;
**Fig. 6**
   [Fig. 6] illustre une vue en perspective de l'organe de régulation de flux d'air de la figure 3, tourné vers la face arrière de l'organe;
**Fig. 7**

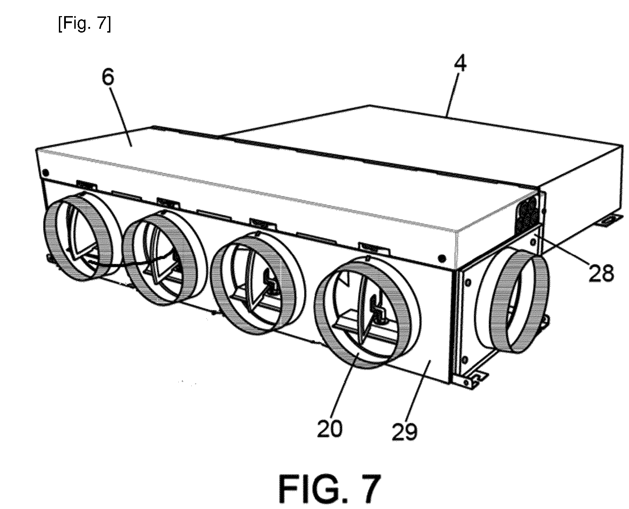

   [Fig. 7] illustre une vue en perspective de l'organe de régulation de flux d'air de la figure 3, monté sur un système de traitement thermique et/ou de purification.

### Description des modes de réalisation

Un système 1 de ventilation, chauffage, climatisation, et/ou purification d'un local 2 est représenté sur la figure 1.

Le local 2 comporte plusieurs zones 3. Le local 2 appartient à un bâtiment utilisé par exemple dans le secteur économique tertiaire. Par exemple les zones 3 sont des bureaux. Par la suite, on appellera « extérieur » un extérieur du bâtiment. Alternativement, le local 2 est par exemple un logement de type individuel ou collectif.

Sur la figure 1, les différentes zones 3 sont séparées par des murs ou forment des espaces clos, mais le système 1 est également adapté pour des zones délimitées sans cloisons fixes soit à l'intérieur du local 2 soit à l'intérieur d'une pièce du local 2, par exemple pour un espace de travail ouvert encore appelé en anglais « open space ».

Un air de chacune des zones 3 peut être renouvelé pour des raisons sanitaires et/ou réglementaires. En outre, l'air de chacune des zones 3 peut être mis à température, pour des raisons de confort et/ou réglementaires. De même, l'air de chacune des zones 3 peut être purifié pour des raisons sanitaires et/ou réglementaires.

Le système 1 permet que les zones 3 bénéficient chacune de ventilation, chauffage et/ou climatisation. Notamment, le système 1 peut comporter un dispositif de traitement thermique 4 de flux d'air et un dispositif de ventilation 5 qui seront décrits ultérieurement. Le système 1 comprend en outre un organe de régulation 6 de flux d'air. L'organe de régulation 6 sera décrit ultérieurement en référence aux figures 2 à 7.

Le dispositif de traitement thermique 4 et le dispositif de ventilation 5 sont reliés fluidiquement à l'organe de régulation 6 de flux d'air. En d'autres termes, un fluide, ici de l'air, peut circuler entre le dispositif de ventilation 5 et le dispositif de traitement thermique 4 d'une part, et l'organe de régulation 6 d'autre part.

Le système 1 peut en outre comprendre un dispositif de traitement de purification de flux d'air 11. Par « purification », on entend par exemple qu'on débarrasse totalement ou partiellement l'air d'impuretés, telles que des microbes, virus, bactéries, insectes, micro-organismes, particules, composés organiques volatils ou semi-volatils, molécules de gaz polluantes, composés inorganiques, etc.

Le traitement de purification de l'air est par exemple un traitement physico-chimique de l'air. Par traitement physico-chimique, on entend par exemple filtration mécanique, filtration gravimétrique, adsorption, ionisation et captation, filtration électrostatique, ozonisation, plasma, photocatalyse, biofiltration, utilisation d'un produit désinfectant ou d'un rayonnement, utilisation de charbon actif, etc.

Selon un autre exemple, le traitement de purification de l'air correspond uniquement à un brassage interne (ou dilution) de l'air de plusieurs zones 3, sans application de traitement physico-chimique. Le brassage interne permet de mélanger l'air d'une ou plusieurs zone(s) plus polluée(s) avec l'air d'une ou plusieurs zone(s) moins polluée(s). Ainsi, on obtient un air comprenant une concentration en polluants intermédiaire entre une concentration en polluants de la ou les zone(s) plus polluée(s) et une concentration en polluants de la ou les zone(s) moins polluée(s).

Selon un autre exemple, le traitement de purification de l'air combine le brassage interne et le traitement physico-chimique de l'air.

Le dispositif de traitement de purification 11 est relié fluidiquement à l'organe de régulation 6 de flux d'air. Ainsi, un fluide, ici de l'air, peut circuler entre le traitement de purification 11 et l'organe de régulation 6.

Dans certains cas, le dispositif de traitement de purification 11 est un dispositif indépendant du dispositif de traitement thermique 4. Dans certains cas, le dispositif de traitement de purification 11 et le dispositif de traitement thermique 4 forment un seul dispositif.

Dans l'exemple de la figure 1, le dispositif de traitement de purification 11 et le dispositif de traitement thermique 4 sont intégrés dans un même caisson 7. Selon un autre exemple de système 1 non représenté, le système 1 ne comprend pas de dispositif de traitement thermique 4 et uniquement le dispositif de traitement de purification 11 est prévu dans le caisson 7. Selon un autre exemple de système 1 non représenté, le dispositif de traitement de purification 11 est situé dans un premier caisson en amont d'un deuxième caisson logeant le dispositif de traitement thermique 4. Dans ce qui suit, uniquement sera décrit l'exemple de la figure 1, dans lequel le dispositif de traitement de purification 11 et le dispositif de traitement thermique 4 sont intégrés dans un même caisson 7.

Comme particulièrement montré sur la figure 7, le caisson 7 présente avantageusement une forme de parallélépipède rectangle.

Avantageusement, une des faces du caisson 7 est ouverte de sorte à constituer une bouche d'aspiration 8. La bouche d'aspiration 8 est équipée d'un moyen d'aspiration, apte à aspirer un flux d'air du local 2, dit flux d'air recyclé. Par exemple, le moyen d'aspiration 8 comprend des ventilateurs pour aspirer le flux d'air recyclé, comme représenté sur la figure 1. La bouche d'aspiration 8 est disposée à l'intérieur du local 2, de sorte que le flux d'air recyclé est originaire d'une ou plusieurs zones 3 du local 2. Autrement dit, le flux d'air recyclé est constitué à partir d'un ou plusieurs flux d'air provenant d'une ou plusieurs zones 3. Dans certains cas, le flux d'air recyclé est constitué uniquement des flux d'air provenant d'une ou plusieurs zones 3 dites « pièces de vie ». Par « pièce de vie » on entend toute pièce non équipée d'une arrivée d'eau. Dans de tels cas, le moyen d'aspiration 8 est uniquement disposé dans les pièces de vie.

Le caisson 7 comporte de préférence au moins un échangeur de chaleur (non représenté) appartenant au dispositif de traitement thermique 4. L'échangeur de chaleur peut par exemple être un évaporateur ou un condenseur. L'échangeur de chaleur est apte à modifier la température du flux d'air aspiré par la bouche d'aspiration 8, de sorte à contrôler une température du flux d'air recyclé.

Avantageusement, un système de contrôle thermique (non représenté) est connecté au dispositif de traitement thermique 4 de l'air. Le système de contrôle thermique comporte au moins un capteur de température 10 installé dans chaque zone 3. L'au moins un capteur de température 10 permet de mesurer la température de l'air dans chaque zone 3. Le système de contrôle thermique comporte en outre un boîtier de contrôle électronique (non représenté) du dispositif de traitement thermique 4, et une connexion électronique connectant électroniquement le boîtier de contrôle et les capteurs de température 10 de chaque zone 3. Cette connexion peut être filaire ou non selon les exemples de réalisation. Ainsi, à partir des mesures de l'au moins un capteur de température 10 de chaque zone 3, l'échangeur de chaleur dans le caisson 7 peut ajuster la température du flux d'air recyclé en fonction d'une température de consigne de l'air dans chaque zone 3. Par « température de consigne » on entend une température souhaitable de l'air dans chaque zone 3 permettant d'assurer un confort d'au moins un occupant de la zone 3. Dans certains cas, la température de consigne peut être établie manuellement par l'occupant de chaque zone 3. Dans certains cas, la température de consigne peut être établie de manière automatique, par exemple en fonction d'une température de l'extérieur ou d'une plage horaire. Comme ce sera détaillé ultérieurement, le système 1 est conçu de sorte que la température d'air ambiant soit réglable pour chacune des zones 3, indépendamment des autres zones 3.

Le dispositif de traitement de purification 11 comprend par exemple au moins un filtre (non représenté). L'au moins un filtre est par exemple installé dans le caisson 7 à proximité de la bouche d'aspiration 8. L'au moins un filtre permet d'opérer une filtration du flux d'air recyclé de manière à débarrasser le flux d'air recyclé d'impuretés. Dans certains cas, le dispositif de traitement de purification 11 peut comprendre un espace de mélange des flux d'air issus de différentes zones 3 et formant le flux d'air recyclé. Dans certains cas, le dispositif de traitement de purification 11 combine la filtration et le mélange des flux d'air formant le flux d'air recyclé.

Comme ce sera expliqué ultérieurement, le dispositif de traitement de purification 11 peut avantageusement être connecté à un système de capteurs de qualité d'air. Le système de capteurs de qualité d'air comprend au moins un capteur 13. Dans certains cas, au moins un capteur 13 est installé dans chaque zone 3 du local 2. De tels cas sont notamment rencontrés lorsque les zones 3 sont complètement séparées entre elles par des murs ou constituent des espaces clos. Dans certains cas, l'au moins un capteur 13 est partagé entre plusieurs zones 3. De tels cas sont notamment rencontrés lorsque les zones 3 ne sont pas séparées entre elles par des murs, lorsque les murs ne séparent pas complètement les zones 3 ou lorsque les zones 3 ne constituent pas des espaces clos. Dans certains cas, certaines zones 3 sont dépourvues de capteurs 13.

L'au moins un capteur 13 est configuré pour mesurer une quantité d'au moins un constituant de l'air dans la zone 3 respective du local 2. L'au moins un constituant de l'air peut être :
- un ou plusieurs composé(s) inorganique(s), et/ou
- un ou plusieurs composé(s) organique(s) volatil(s), et/ou
- un ou plusieurs composé(s) organique(s) semi-volatil(s), et/ou
- particules, et/ou
- micro-organismes, et/ou
- une vapeur d'eau dans la zone polluée à une température donnée.

Le(s) composé(s) inorganique(s) sont par exemple le dioxyde de carbone (CO₂), le monoxyde de carbone (CO), l'ozone (Os), le monoxyde d'azote (NO), le dioxyde d'azote (NO₂) et/ou le radon, entre autres.

Le(s) composé(s) organique(s) volatil(s) sont par exemple des alcools, des aldéhydes, des cétones, des hydrocarbures et/ou des terpènes, entre autres. En particulier, le(s) composé(s) organique(s) volatil(s) sont par exemple le benzène, le formaldéhyde, le naphtalène, le trichloréthylène, le tétrachloroéthylène, l'acide cyanhydrique, l'acétaldéhyde, l'acroléine, l'éthylbenzène et/ou le toluène, entre autres.

Le(s) composé(s) organique(s) semi-volatil(s) sont par exemple des phtalates, des hydrocarbures aromatiques polycycliques, des muscs et/ou des pesticides, entre autres.

Par « micro-organisme » on entend un organisme vivant invisible à l'œil nu, tels des virus ou des bactéries par exemple.

Par « particule » on entend tout composé solide ou liquide suspendu dans l'air de chacune des zones 3.

La quantité de vapeur d'eau dans la zone polluée à une température donnée détermine une humidité relative dans la zone polluée. En particulier, l'humidité relative est définie comme un rapport entre une pression partielle de la vapeur d'eau contenue dans l'air de chaque zone 3 à la température donnée sur une pression de vapeur saturante dans ladite zone 3 à la température donnée. L'humidité relative dans les zones 3 est de préférence comprise dans une plage de valeurs entre 30% et et 70%, de préférence encore entre 40% et 60%. Au-dessus des valeurs supérieures desdites plages de valeurs, il existe par exemple un risque de dégradation du local 2, notamment par prolifération de bactéries, ou condensation et infiltration d'eau dans les murs. En dessous des valeurs inférieures desdites plages de valeurs, il existe par exemple un risque de perte de confort, voire un risque sanitaire, pour les occupants du local 2. Les occupants peuvent par exemple expérimenter un asséchement des muqueuses dû à des conditions de sécheresse dans le local 2. Ainsi, lorsque l'humidité relative dans l'une des zones 3 est en dehors desdites plages de valeurs, la zone 3 est considérée zone polluée.

Dans certains cas, l'au moins un capteur 13 est un capteur de présence permettant de déterminer une présence humaine dans la zone 3 respective.

Avantageusement, le système de capteurs de qualité de l'air comprend en outre un boîtier de contrôle électronique (non représenté) et une connexion électronique connectant électroniquement le boîtier de contrôle et les capteurs 13 de chaque zone 3. Avantageusement, le boîtier de contrôle est muni d'un support de stockage (non représenté), telle une mémoire. Le boîtier de contrôle peut être aussi muni d'un processeur (non représenté). La connexion électronique peut être filaire ou non selon les exemples de réalisation.

Dans certains cas, lorsque le dispositif de traitement thermique 4 est en fonctionnement, le dispositif de traitement de purification 11 ne peut pas fonctionner. Dans certains cas, lorsque le dispositif de traitement de purification 11 est en fonctionnement, le dispositif de traitement thermique 4 ne peut pas fonctionner. Dans certains cas, le dispositif de traitement thermique 4 et le dispositif de traitement de purification 11 peuvent fonctionner de manière concomitante. Dans certains cas, le fonctionnement du dispositif de traitement thermique 4 est privilégié. Ainsi, lorsque le dispositif de traitement thermique 4 est activé, le dispositif de traitement de purification 11 peut être automatiquement arrêté. Dans certains cas, le fonctionnement du dispositif de traitement de purification 11 est privilégié. Ainsi, lorsque le dispositif de traitement de purification 11 est activé, le dispositif de traitement thermique 4 peut être automatiquement arrêté.

Une face du caisson 7 parallèle à la bouche d'aspiration 8 est également ouverte de sorte à constituer une sortie 9 par laquelle s'écoule le flux d'air recyclé. La sortie 9 est reliée fluidiquement à l'organe de régulation 6 de flux d'air.

La liaison fluidique entre la sortie 9 et l'organe de régulation 6 de flux d'air sera décrite plus en détail ultérieurement.

Le dispositif de ventilation 5 comporte un réseau de ventilation apte à aspirer des flux d'air viciés 12 depuis les zones 3 du local 2 pour les extraire du local 2 vers l'extérieur.

Pour cela, le réseau de ventilation comporte une pluralité de bouches de reprise 14 apte à aspirer les flux d'air viciés 12. Chaque bouche de reprise 14 est disposée dans une des zones 3 du local 2. Chaque bouche de reprise 14 est reliée fluidiquement au dispositif de ventilation 5 par l'intermédiaire d'un réseau de gaines 15, de sorte à pouvoir extraire les flux d'air viciés.

Dans certains cas, l'extraction des flux d'air viciés 12 est réalisée depuis des zones 3 dites « pièces humides ». De tels cas sont par exemple rencontrés lorsque le local 2 est un logement de type individuel ou collectif. On entend par « pièce humide » toute pièce équipée d'au moins une arrivée d'eau. Les pièces humides peuvent être par exemple une cuisine, une salle de bain, une salle d'eau, des sanitaires, etc. Dans de tels cas, les bouches de reprise 14 peuvent être uniquement disposées dans les pièces humides.

Le dispositif de ventilation 5 est en outre apte à aspirer un flux d'air neuf depuis l'extérieur pour le transmettre à l'intérieur du local 2 via l'organe de régulation 6.

Pour cela, le dispositif de ventilation 5 comporte une bouche d'aspiration équipée d'un système d'aspiration 17, apte à aspirer un premier flux d'air neuf 18. Le système d'aspiration 17 peut comprendre un ventilateur et/ou un modulateur de débit de flux d'air afin d'aspirer le premier flux d'air neuf 18. Ce premier flux d'air neuf 18 provient de l'extérieur du bâtiment et est destiné à être insufflé dans le local 2. Avantageusement le dispositif de ventilation 5 peut comprendre au moins un filtre (non représenté). Le filtre du dispositif de ventilation 5 est par exemple disposé dans la bouche d'aspiration. Le filtre est par exemple un filtre gravimétrique. Ainsi, le premier flux d'air neuf 18 peut être en outre filtré par le dispositif de ventilation 5 de manière à assurer que le premier flux d'air neuf 18 est peu porteur d'impuretés.

Un volume d'air neuf dans le premier flux d'air neuf 18 peut être fixe, auquel cas un débit d'air neuf est appelé « débit fixe ». En variante, le volume d'air neuf dans le premier flux d'air neuf 18 peut être au contraire variable, auquel cas le débit d'air neuf est appelé « débit variable ».

Le dispositif de ventilation 5 peut comporter tout type de machine permettant de réaliser cette fonction d'aspiration d'air neuf depuis l'extérieur et de rejet d'air vicié vers l'extérieur. Par exemple, des machines dites « simple flux » peuvent convenir. Dans un autre exemple, des machines dites « double flux » peuvent également convenir.

Le dispositif de ventilation 5 comporte également une sortie d'air neuf 19 reliée fluidiquement à l'organe de régulation 6 de flux d'air de sorte à acheminer tout ou partie du premier flux d'air neuf 18 vers l'organe de régulation 6 de flux d'air.

Les figures 2 à 7 représentent l'organe de régulation 6 de flux d'air. Pour des raisons de simplicité de l'illustration, et contrairement aux figures 3 à 7, la figure 2 ne représente pas une vue de l'organe 6 mais un schéma purement fonctionnel de ce dernier.

Dans l'exemple du système de ventilation, chauffage, climatisation, et/ou purification d'un local représenté sur la figure 1, l'organe de régulation 6 de flux d'air est installé en faux plafond. Aussi, il sera fait référence aux directions verticales et horizontales par la suite pour décrire les emplacements relatifs des éléments composant l'organe de régulation 6 de flux d'air en référence aux figures 2 à 7. L'homme du métier comprendra que ces directions sont relatives entre elles, et font référence aux directions de l'espace dans une position d'utilisation de l'organe de régulation 6 de flux d'air en faux plafond. L'homme du métier saura adapter la description dans le cas où l'organe de régulation 6 de flux d'air est utilisé dans une autre position d'utilisation, par exemple perpendiculaire à l'utilisation en faux-plafond, par exemple dans une position d'utilisation dans laquelle l'organe 6 est fixé au mur.

Comme visible sur les figures 2 à 7, l'organe de régulation 6 de flux d'air comporte un caisson 24 présentant avantageusement une forme générale de parallélépipède rectangle.

Le caisson 24 présente ainsi six faces parallèles deux à deux :
- une face supérieure 25 formant un plafond horizontal du caisson et une face inférieure 26 formant un plancher horizontal du caisson,
- deux petites faces latérales verticales 27 et 28, et
- deux grandes faces verticales formant une face avant 29 du caisson et une face arrière 30 du caisson 24.

Comme ce sera détaillé ultérieurement, la face avant 29 comporte une pluralité de sorties 42 de flux d'air recyclé, une pluralité de sorties 43 de flux d'air neuf et une pluralité d'embouchures 20.

La face arrière 30 du caisson 24 est couverte d'une plaque rectangulaire 31 évidée en son centre d'un rectangle de dimension inférieure à la plaque rectangulaire 31 évidée en son centre. L'évidement est par exemple de forme rectangulaire, comme visible sur la figure 6. La plaque rectangulaire 31 évidée forme par son évidement une entrée 32 de flux d'air recyclé depuis le dispositif de traitement thermique 4 et/ou du dispositif de traitement de purification 11. Cette entrée 32 présente ainsi une étendue horizontale permettant de distribuer le flux d'air recyclé sur toute la longueur du caisson 24.

Préférentiellement, on prévoit, comme représenté sur les figures 2 à 7, un dispositif de répartition du flux d'air recyclé en face de l'entrée 32. Le dispositif de répartition comporte au moins deux déflecteurs 33 afin de défléchir le flux d'air recyclé du centre du caisson 24 vers les parties latérales périphériques. Grâce à ces caractéristiques, l'organe de régulation 6 de flux d'air permet de répartir de façon sensiblement homogène un débit d'air recyclé sur la pluralité de sorties 42 de flux d'air recyclé. Dans certains cas, le débit d'air recyclé à repartir sur la pluralité des sorties 42 est constant. Dans d'autres cas, le débit d'air recyclé à repartir sur la pluralité des sorties 42 est variable.

La liaison fluidique entre la sortie 9 du caisson 7 et l'organe de régulation 6 de flux d'air est réalisée en fixant la face arrière 30 du caisson 24 sur la sortie 9. Ainsi, l'organe de régulation 6 est relié fluidiquement au dispositif de traitement thermique 4 et/ou au dispositif de traitement de purification de flux d'air 11.

Comme représenté sur les figures 2, 4 et 5, le caisson 24 présente en outre une cloison 34 le séparant ainsi en deux compartiments étanches entre eux:
- un compartiment 35 d'amené de flux d'air recyclé, et
- un compartiment 36 d'amenée de flux d'air neuf.

La cloison 34 présente une forme générale de U, c'est-à-dire composée d'une plaque horizontale rectangulaire dont deux bords 37 et 38 opposés sont pliés de sorte à former deux plaques inclinées symétriquement par rapport à un plan vertical. Les deux plaques inclinées sont solidaires du plafond du caisson 24. La plaque verticale rectangulaire évidée ferme les parties extérieures du U et ne laisse ouvert par son évidement que l'intérieur du U.

L'intérieur du U forme ainsi le compartiment 35 d'amenée de flux d'air recyclé tandis que l'extérieur du U forme le compartiment 36 d'amenée de flux d'air neuf, comme il est décrit ci-dessous plus en détail.

La face latérale 28 comporte un conduit 39 formant une entrée de flux d'air neuf. L'entrée 39 de flux d'air neuf peut être reliée fluidiquement à la sortie d'air neuf 19 du dispositif de ventilation 5 par un réseau 50. Le conduit 39 permet l'entrée dans l'organe de régulation 6 d'un débit d'air neuf, dit débit d'air neuf global. Le réseau 50 peut comporter un ou plusieurs organes de contrôle (non représentés) du débit d'air neuf entrant dans l'organe de régulation 6. Dans certains cas, le débit d'air neuf global est maintenu constant. Dans certains cas, le débit d'air neuf global est variable. Dans certains cas, le débit d'air neuf global peut être variable, puis constant, ou vice-versa.

L'entrée 39 est agencé sur une plaque amoviblement fixée au caisson par l'intermédiaire de vis 400. Ainsi, la plaque amovible peut être alternativement disposée sur l'une ou l'autre des petites faces latérales 27, 28, tandis que l'autre petite face latérale 28, 27 est équipée d'une autre plaque amovible ne présentant pas de conduit. Ainsi, le caisson 24 peut être fermé hermétiquement par la plaque amovible.

Grâce à ces caractéristiques, un opérateur peut choisir la configuration la plus simple en fonction de l'environnement, afin de connecter l'organe de régulation 6 au dispositif de ventilation 5 par le réseau 50 via le conduit 39.

En outre, l'une des plaques inclinées 37, 38 de la cloison 34 étant agencée en face du conduit 39 permet, en fonctionnement, de défléchir l'air neuf dans le compartiment 36 d'amenée de flux d'air neuf.

Maintenant sera décrite la pluralité d'embouchures 20. Chacune des embouchures 20 a par exemple une forme circulaire.

Comme représenté sur les figures 2 à 7, la plaque horizontale rectangulaire de la cloison 34 délimite chacune des embouchures 20 en deux portions, l'une supérieure 40 et l'autre inférieure 41. Une section de la portion supérieure 40 représente par exemple environ ¾ de la section totale de l'embouchure 20. Une section de la portion inférieure 41 représente par exemple environ ¼ de la section totale de l'embouchure 20.

La portion supérieure 40 forme la sortie 42 de flux d'air recyclé de chaque embouchure 20. La sortie 42 est reliée fluidiquement, via l'intérieur du compartiment 35 d'amenée de flux d'air recyclé, à l'entrée 32 de flux d'air recyclé.

La portion inférieure 41 forme la sortie 43 de flux d'air neuf de chaque embouchure. En particulier, la sortie 43 permet le passage à travers l'embouchure 20 d'un deuxième débit d'air neuf. Le deuxième débit d'air neuf est inférieur ou sensiblement égal au premier débit d'air neuf. En particulier, le deuxième débit d'air neuf peut être sensiblement égal au premier débit d'air neuf uniquement lorsqu'une seule sortie 43 de l'organe 6 permet la sortie d'air neuf vers le local 2, les autres sorties 43 étant obturées. La sortie 43 est reliée fluidiquement, via l'intérieur du compartiment 36 d'amenée de flux d'air neuf, au conduit 39 formant l'entrée de flux d'air neuf.

Ainsi, chaque embouchure 20 présente à la fois une sortie 42 de flux d'air recyclé et une sortie 43 d'air neuf. Un mélange 23 de flux d'air comportant de l'air neuf et de l'air recyclé traverse ainsi chaque embouchure 20.

Chacune des embouchures 20 est associée à au moins une zone 3 respective du local 2. Comme visible sur la figure 1, chaque embouchure 20 est connectée à une gaine 21. Dans certains cas, la gaine 21 permet de relier fluidiquement l'organe de régulation 6 de flux d'air à l'une des zones 3 via une bouche de soufflage 22. Dans certains cas, la gaine 21 permet de relier fluidiquement l'organe de régulation 6 de flux d'air à plusieurs zones 3 via la bouche de soufflage 22. Ainsi, l'organe de régulation 6 de flux d'air est apte à délivrer dans chacune des zones 3 le mélange 23 des flux d'air neuf et d'air recyclé.

La répartition du mélange 23 des flux d'air, notamment le débit d'air recyclé et le débit d'air neuf, est contrôlable zone 3 par zone 3, comme ce sera expliqué ci-après.

Comme il ressort des figures 2 à 7, l'organe de régulation 6 de flux d'air comprend pour chaque embouchure 20 un dispositif de régulation du débit d'air neuf. Dans certains cas, comme le montrent les figures 2 à 7, l'organe de régulation 6 comprend pour chaque embouchure 20 un dispositif de régulation du débit d'air recyclé.

Dans l'exemple d'organe de régulation 6 des figures 2 à 7, les dispositifs de régulation du débit d'air neuf et de flux d'air recyclé sont des volets. En particulier, la sortie 42 de flux d'air recyclé est équipée d'un volet 44 monté pivotant autour d'un axe sensiblement vertical 45 dans la portion supérieure 40. L'axe vertical 45 est sensiblement disposé au centre de la portion supérieure 40, de sorte à subdiviser la portion supérieure 40 en deux parties sensiblement symétriques. Ainsi, deux sections de passage du flux d'air recyclé sensiblement équivalentes sont formées.

Le volet 44 est monté pivotant entre deux positions extrêmes : une position de fermeture complète de la sortie 42 de flux d'air recyclé et une position d'ouverture complète de la sortie 42 de flux d'air recyclé. La fermeture complète est permise par la forme du volet 44. En effet, le volet 44 présente la même forme et même surface que la section de la portion supérieure 40.

Comme représenté sur les figures 4 et 5, l'organe de régulation 6 de flux d'air peut comporter un premier actionneur 46 pour chacun des volets 44 des sorties 42 de flux d'air recyclé. L'actionneur 46 est par exemple un moteur pas-à-pas. Chaque actionneur 46 permet de contrôler une rotation de chaque volet 44 respectif en réponse à une commande électronique.

Le boîtier de contrôle électronique du dispositif de traitement thermique 4 peut être adapté pour envoyer les commandes électroniques de rotation de chaque volet 44 indépendamment des autres volets 44. De même, le système de capteurs de qualité d'air peut être adapté pour envoyer les commandes électroniques de rotation de chaque volet 44 indépendamment des autres volets 44. Ainsi, le boîtier de contrôle électronique et/ou les capteurs 13 permettent de contrôler le débit d'air recyclé à destination de chaque zone 3. Le contrôle peut donc être effectué, pour une zone 3 donnée, en fonction de la température de consigne et de la température de la zone 3 qui est relevée par le capteur de température 10 correspondant. Le contrôle peut être effectué aussi ou alternativement, pour une zone 3 donnée, en fonction de la quantité de l'au moins un constituant de l'air dans la zone 3 respective mesurée par les capteurs 13. Dans certains cas, le contrôle est effectué en fonction de la détection par les capteurs 13 de la présence humaine dans la zone 3 donnée.

Le volet 44 présente ainsi une fonction de régulation du débit d'air dans la sortie 42 de flux d'air recyclé.

La sortie 43 de flux d'air neuf est équipée d'un volet 47 monté pivotant. Le volet 47 est monté pivotant autour d'un axe horizontal X. L'axe horizontal coïncide avec le bord supérieur de la portion inférieure 41. Le volet 47 est monté pivotant entre deux positions extrêmes : une position de fermeture complète de la sortie 43 de flux d'air neuf et une position d'ouverture complète de la sortie 43 de flux d'air neuf. Le volet 47 présente une forme et une surface sensiblement similaires ou plus grandes que la portion inférieure 41. Ainsi, dans la position de fermeture complète, la sortie 43 peut être obturée.

Le système de capteurs de qualité d'air peut être adapté pour envoyer les commandes électroniques de rotation de chaque volet 47 indépendamment des autres volets 47. Ainsi, les capteurs 13 permettent de contrôler le débit d'air neuf à destination de chaque zone 3. Comme ce sera expliqué ultérieurement, le contrôle est effectué, pour une zone 3 donnée, en fonction de la quantité de l'au moins un constituant de l'air dans la zone 3 mesurée par les capteurs 13. Dans certains cas, le contrôle est effectué en fonction de la détection par les capteurs 13 de la présence humaine dans la zone 3 donnée.

Le volet 47 présente ainsi une fonction de régulation du débit d'air neuf dans la sortie 43 de flux d'air neuf.

On note que le volet 44 de la sortie de flux d'air recyclé et le volet 47 de la sortie de flux d'air neuf sont donc montés pivotants autour d'axes sécants perpendiculaires. Ainsi, l'organe 6 peut être réalisé de façon compacte, ce qui est particulièrement avantageux par exemple pour une installation dans un faux plafond.

Bien entendu, les volets 44, 47 peuvent être remplacés par d'autres dispositifs permettant d'ouvrir et fermer les sorties 42 d'air recyclé et les sorties 43 d'air neuf. Par exemple, les volets 44, 47 peuvent être remplacés par un iris de ventilation installé dans chaque embouchure 20.

On note que l'organe 6 permet de réguler la répartition de flux d'air neuf par zone 3 par le biais d'au moins un deuxième actionneur (non représenté) permettant de régler la position des volets 47. Dans certains cas, un deuxième actionneur est prévu pour chaque volet 47. Dans certains cas, un seul deuxième actionneur est prévu pour tous les volets 47.

L'organe de régulation 6 présente l'avantage de permettre de mutualiser un réseau de gaine déjà prévu pour le soufflage de l'air recyclé en y ajoutant de l'air neuf tout en permettant de régler la répartition de la quantité d'air neuf par gaine une fois l'installation des gaines terminée.

Maintenant sera décrit un procédé de pilotage du système 1 de ventilation, chauffage, climatisation et/ou purification décrit ci-avant. Dans ce qui suit, l'expression « air recyclé » fait référence à un flux d'air ayant été traité par le dispositif de traitement de purification 11, que ce soit par filtration et/ou par brassage interne, comme expliqué précédemment.

Le procédé comprend une première étape de comparaison d'une valeur d'au moins un paramètre, dite valeur de paramètre, à une valeur donnée, dite valeur de comparaison, de l'au moins un paramètre dans chacune des zones 3. Le paramètre est relatif à l'au moins un constituant de l'air de chaque zone 3. Le paramètre est par exemple une quantité dans l'air d'au moins l'un des constituants de l'air de chaque zone 3.

Comme présenté précédemment, l'au moins un constituant de l'air peut être choisi parmi :
- un ou plusieurs composé(s) inorganique(s), et/ou
- un ou plusieurs composé(s) organique(s) volatil(s), et/ou
- un ou plusieurs composé(s) organique(s) semi-volatil(s), et/ou
- particules, et/ou
- microorganismes, et/ou
- une vapeur d'eau dans la zone polluée à une température donnée.

La valeur de paramètre est déterminée grâce à l'au moins un capteur 13 prévu dans chaque zone 3.

La valeur de comparaison correspond à une valeur prédéterminée pour chaque zone 3 de l'au moins un paramètre associé à la valeur de paramètre. La valeur de comparaison peut en particulier correspondre à une valeur maximale de l'au moins un paramètre imposée dans la réglementation pour assurer un niveau optimal de qualité d'air dans la zone 3 respective. La valeur de comparaison peut aussi correspondre à une valeur maximale de l'au moins un paramètre établie par l'occupant de chaque zone 3. Dans certains cas, la valeur de comparaison de l'au moins un paramètre est la même pour toutes les zones 3. Dans certains cas, la valeur de comparaison de l'au moins un paramètre diffère entre les zones 3. Avantageusement, la valeur de comparaison est stockée sur le support de stockage du boîtier de contrôle électronique associé aux capteurs 13.

La comparaison entre la valeur de paramètre et la valeur de comparaison peut, par exemple, être réalisée par le processeur du boîtier de contrôle électronique associé aux capteurs 13.

La comparaison entre la valeur de paramètre et la valeur de comparaison comprend en particulier la détermination d'un ratio, dit ratio de pollution. Le ratio de pollution est défini comme le rapport entre la valeur de paramètre et la valeur de comparaison dans chacune des zones 3. Autrement dit, le ratio de pollution est le ratio de la valeur de paramètre sur la valeur de comparaison. Le niveau optimal de qualité d'air est donc assuré lorsque le ratio de pollution est inférieur à une valeur égale à 1, dite valeur unitaire.

Lorsque dans l'une des zones 3, dite zone polluée, le ratio de pollution est supérieur ou égal à 1, la qualité de l'air ne peut pas être jugée satisfaisante dans ladite zone polluée.

Afin d'y remédier, le procédé selon le présent exposé comprend une étape d'augmentation du débit d'air neuf par le dispositif de régulation d'air neuf de la ou les embouchure(s) 20 associée(s) à la zone polluée. En particulier, au cours de l'étape d'augmentation du débit d'air neuf, le volet 47 de chaque embouchure 20 associée à la zone polluée peut se déplacer autour de l'axe horizontal X vers le bord supérieur de la portion inférieure 41. Autrement dit, le volet 47 de chaque embouchure 20 associée à la zone polluée peut se déplacer de la position de fermeture complète vers la position d'ouverture complète. Ledit volet 47 de chaque embouchure 20 associée à la zone polluée peut ou non atteindre la position d'ouverture complète.

Ainsi, chaque volet 47 peut se déplacer de manière à augmenter la section de la sortie 43 d'air neuf de chaque embouchure associée à la zone polluée. De ce fait, le passage d'air neuf à travers les embouchures 20 associées à la zone polluée est favorisé, de manière à favoriser l'entrée d'air neuf dans ladite zone polluée.

Lorsque plusieurs embouchures 20 sont associées à la zone polluée, le déplacement des volets 47 respectifs peut se faire indépendamment les uns des autres. Ainsi, l'augmentation de la section de la sortie 43 peut différer entre les embouchures 20 associées à la zone polluée.

Dans certains cas, le dispositif de régulation d'air neuf de chaque zone 3 non polluée se déplace de manière à réduire la section de chaque sortie 43 d'air neuf des embouchures 20 respectives. Autrement dit, le volet 47 de chaque embouchure 20 associée aux zones 3 non polluées peut se déplacer entre la position d'ouverture complète et la position de fermeture complète, ledit volet 47 pouvant ou non atteindre ladite position de fermeture complète. La réduction de section des sorties 43 des embouchures 20 associées aux zones non polluées est notamment avantageuse lorsque le débit d'air neuf global est maintenu constant, mais elle peut aussi avoir lieu lorsque le débit d'air neuf global est variable. Grâce à la réduction de la section des sorties 43 des embouchures 20 associées aux zones 3 non polluées, le débit d'air neuf introduit dans la zone polluée augmente, même si le débit d'air neuf global est constant.

Les volets 47 des embouchures associées aux zones non polluées peuvent se déplacer indépendamment les uns des autres lorsque plusieurs embouchures 20 sont associées aux zones non polluées. Ainsi, la réduction de section des sorties 43 peut différer entre chaque embouchure 20 associée aux zones non polluées. Bien entendu, il est également possible qu'uniquement certains volets 47 d'embouchures 20 associées aux zones 3 non polluées se déplacent de manière à réduire la section des sorties 43 respectives. Ainsi, dans certains cas, uniquement se déplacent les volets 47 d'embouchures 20 associées aux zones 3 non polluées et placées entre le conduit 39 formant l'entrée de flux d'air neuf et la ou les embouchures 20 associées à la zone polluée.

Afin d'améliorer la qualité de l'air dans la zone polluée, le procédé peut en outre comprendre une étape d'augmentation du débit d'air recyclé traversant la ou les embouchure(s) 20 associée(s) à la zone polluée. L'étape d'augmentation du débit d'air recyclé comprend une activation du dispositif de régulation du débit d'air recyclé disposé dans la sortie 42 d'air recyclé de chaque embouchure 20 associée à la zone polluée. En particulier, au cours de l'étape d'augmentation du débit d'air recyclé, le volet 44 de chaque embouchure 20 associée à la zone polluée peut se déplacer de manière à augmenter la section de la sortie 42 d'air recyclé de l'embouchure 20 associée à ladite au moins une zone polluée. Autrement dit, le volet 44 de chaque embouchure 20 associée à la zone polluée peut se déplacer de la position de fermeture complète vers la position d'ouverture complète. Ledit volet 44 de chaque embouchure 20 associée à la zone polluée peut ou non atteindre la position d'ouverture complète. Ainsi, le passage d'air recyclé à travers les embouchures 20 associées à la zone polluée est favorisé, de manière à favoriser l'entrée d'air recyclé dans ladite zone polluée.

Lorsque plusieurs embouchures 20 sont associées à la zone polluée, le déplacement des volets 44 respectifs peut se faire indépendamment les uns des autres. Ainsi, l'augmentation de la section de la sortie 42 peut différer entre les embouchures 20 associées à la zone polluée.

Dans certains cas, le dispositif de régulation des zones 3 de chaque zone 3 non polluée se déplace de manière à réduire la section de chaque sortie 42 d'air recyclé des embouchures 20 associées auxdites zones 3 non polluées. Autrement dit, le volet 44 de chaque embouchure 20 associée aux zones 3 non polluées peut se déplacer entre la position d'ouverture complète et la position de fermeture complète, ledit volet 44 pouvant ou non atteindre ladite position de fermeture complète. Ainsi, le débit d'air recyclé traversant chaque embouchure 20 associée à chaque zone non polluée diminue.

Les volets 44 des embouchures associées aux zones non polluées peuvent se déplacer indépendamment les uns des autres lorsque plusieurs embouchures 20 sont associées aux zones non polluées. Ainsi, la réduction de section des sorties 42 peut différer entre chaque embouchure 20 associée aux zones non polluées. Bien entendu, il est également possible qu'uniquement certains volets 44 d'embouchures 20 associées aux zones 3 non polluées se déplacent de manière à réduire la section des sorties 42 respectives.

Lorsque le débit d'air recyclé à repartir sur la pluralité des sorties 42 est variable, l'étape d'augmentation du débit d'air recyclé traversant la ou les embouchure(s) 20 associée(s) à la zone polluée peut se faire sans les déplacements des volets 44 expliqués ci-avant. En particulier, une augmentation du débit d'air recyclé à repartir sur la pluralité des sorties 42 peut permettre d'augmenter le débit d'air recyclé traversant la ou les embouchure(s) 20 associée(s) à la zone polluée, sans besoin de diminuer le débit d'air recyclé traversant la ou le(s) embouchure(s) 20 associée(s) aux zones non polluée(s).

Dans certains cas, l'augmentation du débit d'air recyclé et/ou l'augmentation du débit d'air neuf dans la ou les zone(s) polluée(s) est corrélée à la valeur du ratio de pollution. Par exemple, plus le ratio de pollution s'éloigne de la valeur unitaire, plus l'augmentation du débit d'air neuf et/ou du débit d'air recyclé est importante dans chaque zone polluée.

Lorsque le ratio de pollution est supérieur à la valeur unitaire pour au moins deux constituants de l'air, un ordre de priorité est établi entre les au moins deux constituants de l'air. Ainsi, une valeur de l'augmentation du débit d'air neuf et/ou du débit d'air recyclé traversant la ou les embouchure(s) associées à la zone polluée dépend dudit ordre de priorité. Dans certains cas, l'ordre de priorité est établi en fonction d'un écart absolu entre le ratio de pollution et la valeur unitaire pour chaque constituant de l'air. Ainsi, la valeur de l'augmentation du débit d'air neuf et/ou du débit d'air recyclé traversant la ou les embouchure(s) associées à la zone polluée est déterminée en fonction du constituant dont le ratio de pollution est le plus éloigné de la valeur unitaire. Dans certains cas, l'ordre de priorité dépend d'une nature de chaque constituant de l'air. Ainsi, par exemple, le CO₂ étant un marqueur de présence humaine dans les zones 3, la priorité peut être accordée au CO₂ par rapport aux autres constituants de l'air. Ainsi, si dans la zone polluée le ratio de pollution relatif au CO₂ et le ratio de pollution relatif à au moins un autre constituant de l'air dépassent la valeur unitaire, la valeur de l'augmentation du débit d'air neuf et/ou du débit d'air recyclé traversant la ou les embouchure(s) associées à la zone polluée visera prioritairement à faire baisser en dessous de la valeur unitaire le ratio de pollution relatif au CO₂, et cela même si l'écart absolu entre le ratio de pollution du CO2 et la valeur unitaire est inférieur à l'écart absolu entre le ratio de pollution de l'autre constituant de l'air et la valeur unitaire.

L'ordre de priorité peut aussi être employé lorsqu'on a au moins deux zones polluées dans le local 2. Dans ce cas, le déplacement des volets 44, 47 dans l'organe de régulation 6 peut être fait par exemple de manière à favoriser l'entrée d'air neuf et/ou d'air recyclé dans la zone polluée ayant un ratio de pollution supérieur à la valeur unitaire pour le constituant établi comme prioritaire dans l'ordre de priorité. Ainsi par exemple, on peut avoir une première zone polluée ayant le ratio de pollution pour le CO₂ supérieur à la valeur unitaire, et une deuxième zone polluée dont le ratio de pollution dépasse la valeur unitaire pour le NO₂. Si le CO₂ est considéré comme prioritaire par rapport au NO₂, les volets 44 et/ou les volets 47 des embouchures 20 associées à la première zone polluée peuvent augmenter davantage la section des sorties 42 et/ou des sorties 43 par rapport aux volets 44 et/ou aux volets 47 des embouchures 20 associés à la deuxième zone polluée. Si l'ordre de priorité est établi en fonction d'un écart absolu entre le ratio de pollution et la valeur unitaire pour chaque constituant de l'air, l'augmentation de la section des sorties 42 et/ou des sorties 43 sera plus importante dans les embouchures 20 associées à la zone polluée ayant un écart absolu supérieur entre le ratio de pollution de l'un des constituants de l'air et la valeur unitaire.

Dans certains cas, l'étape d'augmentation du débit d'air neuf par le volet 47 de chaque embouchure 20 associée à ladite au moins une zone polluée dure jusqu'à ce que le ratio de pollution soit inférieur à la valeur unitaire dans chaque zone polluée. Dans certains cas, l'étape d'augmentation du débit d'air recyclé par le volet 44 de chaque embouchure 20 associée à ladite au moins une zone polluée dure jusqu'à ce que le ratio de pollution soit inférieur à la valeur unitaire dans chaque zone polluée.

On note que le procédé selon le présent exposé peut être appliqué en permanence dans le local 2. Ainsi, le procédé permet de surveiller en permanence les constituants de l'air dans les zones 3 du local 2 associées à au moins un capteur 13, ce qui permet d'ajuster les débits d'air neuf et d'air recyclé arrivant dans chaque zone 3 lorsque le ratio de pollution pour au moins un constituant de l'air des zones 3 dépasse la valeur unitaire dans au moins l'une des zones 3.

Dans certains cas, l'organe de régulation 6 fournit en permanence un débit d'air neuf et/ou un débit d'air recyclé à chaque zone 3 à travers les sorties 43 et les sorties 42 respectivement. Ainsi, la qualité de l'air dans chaque zone 3 peut être lissée dans le temps. Dans certains cas, la sortie 42 de chaque embouchure 20 fournit le débit d'air recyclé à la ou les zone(s) 3 respective(s) du local pendant des plages horaires définies. Dans certains cas, la sortie 43 de chaque embouchure 20 fournit le débit d'air neuf à la ou les zone(s) 3 respective(s) du local pendant des plages horaires définies.

On note que de préférence, la somme des débits d'air neuf et d'air recyclé introduits dans chaque zone 3 est égale à un débit d'air vicié extrait de la zone 3 respective. Ainsi, la pression dans chaque zone 3 est constante.

Grâce à l'utilisation de débits d'air recyclé pour améliorer la qualité de l'air dans les zones 3, le procédé selon le présent exposé permet en outre de limiter le recours à l'introduction d'air neuf dans le local 2 et réduire ainsi les déperditions énergétiques. Ainsi, par exemple, lorsque plusieurs zones 3 ne sont pas polluées, le débit d'air neuf introduit dans les zones polluées peut être diminué et remplacé par le débit d'air recyclé constitué, en totalité ou en partie, par des flux d'air issus des zones 3 non polluées.

Bien entendu, la présente divulgation ne se limite pas à l'exemple décrit ci-avant en regard des figures. La présente divulgation englobe également toutes les variantes et combinaisons que pourra envisager l'homme de l'art dans le cadre de la protection recherchée.

Ainsi, par exemple, l'augmentation du débit d'air neuf et/ou du débit d'air recyclé introduits dans chaque zone 3 peut être fait en fonction de la détection par le(s) capteur(s) 13 d'une présence humaine dans les zones 3.

De même, la comparaison entre la valeur de paramètre et la valeur de comparaison peut comprendre en particulier la détermination d'un dépassement entre la valeur de paramètre et la valeur de comparaison dans chacune des zones 3. Dans ces cas, les zones 3 sont considérées zones polluées lorsque la valeur de paramètre est supérieure à la valeur de comparaison. L'augmentation du débit d'air neuf et/ou du débit d'air recyclé introduit dans la au moins une zone polluée a lieu donc lorsque dans la au moins une zone polluée la valeur de paramètre est supérieure à la valeur de comparaison.

De même, le procédé peut comprendre une comparaison interzone des valeurs de paramètre. Dans cette configuration, la valeur de paramètre pour un même constituant de l'air est comparée entre les différentes zones 3. Lorsque les valeurs de paramètre différent entre zones, les étapes d'augmentation de débit d'air neuf et/ou d'augmentation de débit d'air recyclé décrites ci-avant visent à homogénéiser les valeurs de paramètres dans toutes les zones 3.

Enfin, le procédé peut aussi être adapté pour déterminer des valeurs de paramètre qui s'écartent d'une plage de comparaison. La plage de comparaison correspond à une plage de valeurs prédéterminée pour chaque zone 3 comprenant une limite inférieure et une limite supérieure de valeurs entre lesquelles doit avantageusement être incluse la valeur de paramètre. La plage de comparaison peut en particulier correspondre à une plage de valeurs de l'au moins un paramètre imposée dans la réglementation pour assurer un niveau optimal de qualité d'air dans la zone 3 respective. La plage de comparaison peut aussi correspondre à une valeur maximale de l'au moins un paramètre établie par l'occupant de chaque zone 3. Dans ces cas, lorsque la valeur de paramètre n'est pas incluse dans la plage de comparaison, le procédé peut modifier les débits d'air neuf et d'air recyclé introduits dans chaque zone 3, jusqu'à ce que la valeur de paramètre soit comprise dans la plage de comparaison dans toutes les zones 3. Cette configuration permet par exemple de régler l'humidité relative dans chaque zone 3, de manière à ce qu'elle soit incluse de préférence entre 30% et 70%, de préférence encore entre 40% et 60%.

## Revendications

1. Procédé de pilotage d'un système (1) de ventilation, chauffage, climatisation et/ou purification de plusieurs zones (3) d'un local (2), ledit système (1) comprenant au moins un organe de régulation (6) de flux d'air et un dispositif de traitement thermique (4) de flux d'air et/ou un dispositif de traitement de purification (11) de flux d'air circulant dans ledit système (1), le système comprenant en outre un dispositif de ventilation (5), l'organe de régulation (6) comportant un caisson (24) comprenant :
- une entrée (39) adaptée pour recevoir un flux d'air, dit air neuf, depuis le dispositif de ventilation (5), dite première entrée,
- une entrée (32) adaptée pour recevoir un flux d'air, dit air recyclé, depuis le dispositif de traitement thermique (4) et/ou du dispositif de traitement de purification (11) de flux d'air, dite deuxième entrée,
- une pluralité d'embouchures (20) adaptées pour être chacune connectée à une gaine (21) respective du système (1) pour amener un flux d'air dans une zone (3) respective du local (2), chaque embouchure (20) étant associée à au moins une zone (3) respective du local (2),
chaque embouchure (20) comprenant :
- une première portion (41) reliée fluidiquement à la première entrée (39) et formant une première sortie d'air (43),
- une deuxième portion (40) reliée fluidiquement à la deuxième entrée (32) et formant une deuxième sortie d'air (42),
l'organe (6) comportant en outre, pour chacune des embouchures (20), un dispositif de régulation (47) d'un débit d'air neuf, appelé premier dispositif de régulation, disposé dans la première sortie d'air (43), le premier dispositif de régulation (47) étant mobile entre une position de fermeture complète de la première sortie d'air (43) et une position d'ouverture complète de la première sortie d'air (43),
le procédé comprenant les étapes suivantes :
- comparaison d'une valeur d'au moins un paramètre, dite valeur de paramètre, relatif à au moins un constituant d'un air, à une valeur donnée, dite valeur de comparaison, dans chacune des zones (3),
le procédé étant **caractérisé en ce que**
si un ratio, dit ratio de pollution, de ladite valeur de paramètre sur ladite valeur de comparaison est supérieur ou égal à une valeur égale à 1, dite valeur unitaire, dans au moins l'une des zones (3), dite zone polluée,
- augmentation du débit d'air neuf par ledit premier dispositif de régulation (47) de l'embouchure (20) associée à ladite au moins une zone polluée, et/ou
- augmentation d'un débit d'air recyclé traversant l'embouchure (20) associée à ladite au moins une zone polluée.

2. Procédé selon la revendication précédente, dans lequel l'étape d'augmentation du débit d'air recyclé comprend une activation d'un dispositif de régulation (44) du débit d'air recyclé, appelé deuxième dispositif de régulation, disposé dans la deuxième sortie d'air (42), le deuxième dispositif de régulation (44) étant mobile entre une position de fermeture complète de la deuxième sortie d'air (42) et une position d'ouverture complète de la deuxième sortie d'air (42).

3. Procédé selon la revendication précédente, dans lequel, au cours de l'étape d'augmentation du débit d'air recyclé traversant l'embouchure (20) associée à ladite au moins une zone polluée, le deuxième dispositif de régulation (44) de ladite embouchure associée à ladite au moins une zone polluée se déplace de manière à augmenter une section de la deuxième sortie d'air (42) de ladite embouchure (20) associée à ladite au moins une zone polluée, et/ou les deuxièmes dispositifs de régulation (44) des zones non polluées se déplacent de manière à réduire une section des deuxièmes sorties d'air (42) respectives.

4. Procédé selon l'une des revendications précédentes, dans lequel, au cours de l'étape d'augmentation du débit d'air neuf par ledit premier dispositif de régulation (47) de l'embouchure (20) associée à la dite au moins une zone polluée, le premier dispositif de régulation (47) de la dite au moins une zone polluée se déplace de manière à augmenter une section de la première sortie d'air (43) de ladite embouchure (20) associée à ladite au moins une zone polluée, et/ou les premiers dispositifs de régulation (47) des zones non polluées se déplacent de manière à réduire une section des premières sorties d'air (43) respectives.

5. Procédé selon l'une des revendications précédentes, dans lequel l'étape d'augmentation du débit d'air neuf par ledit premier dispositif de régulation (47) de l'embouchure (20) associée à ladite au moins une zone polluée dure jusqu'à ce que le ratio de pollution soit inférieur à la valeur unitaire dans la zone polluée.

6. Procédé selon l'une des revendications précédentes, dans lequel l'augmentation du débit d'air recyclé et/ou l'augmentation du débit d'air neuf est corrélée à la valeur du ratio de pollution.

7. Procédé selon l'une des revendications précédentes, dans lequel un débit d'air neuf en entrée de l'organe de régulation (6), dit débit d'air neuf global, est maintenu constant.

8. Procédé selon l'une des revendications 1 à 6, dans lequel un débit d'air neuf en entrée de l'organe de régulation (6), dit débit d'air neuf global, est variable.

9. Procédé selon l'une des revendications précédentes, dans lequel ledit au moins un constituant de l'air est choisi parmi :
- un ou plusieurs composé(s) inorganique(s), et/ou
- un ou plusieurs composé(s) organique(s) volatil(s), et/ou
- un ou plusieurs composé(s) organique(s) semi-volatil(s), et/ou
- particules, et/ou
- microorganismes, et/ou
- une vapeur d'eau dans la zone polluée à une température donnée.

10. Procédé selon l'une quelconque des revendications précédentes, dans lequel lorsque le ratio de pollution est supérieur à la valeur unitaire pour au moins deux constituants de l'air, un ordre de priorité est établi entre les au moins deux constituants de l'air, une valeur de l'augmentation du débit d'air neuf et/ou du débit d'air recyclé dépendant dudit ordre de priorité.

11. Procédé selon la revendication précédente, dans lequel l'ordre de priorité est établi en fonction d'un écart absolu entre le ratio de pollution et la valeur unitaire pour chaque constituant de l'air, et/ou d'une nature de chaque constituant de l'air, et/ou d'une détection d'une présence humaine dans la zone polluée.

12. Procédé selon l'une quelconque des revendications précédentes, dans lequel la deuxième sortie d'air (42) de chaque embouchure (20) fournit un débit d'air recyclé à la ou les zones (3) respectives du local pendant des plages horaires définies.

## Patentansprüche

1. Verfahren zur Steuerung eines Systems (1) zur Belüftung, Heizung, Klimatisierung und/oder Reinigung mehrerer Bereiche (3) eines Raums (2), wobei das System (1) wenigstens ein Element zur Regulierung (6) von Luftströmen und eine Vorrichtung zur Wärmebehandlung (4) von Luftströmen und/oder eine Vorrichtung zur Reinigungsbehandlung (11) von Luftströmen, die in dem System (1) zirkulieren, umfasst, wobei das System ferner eine Belüftungsvorrichtung (5) umfasst, wobei das Regulierungselement (6) einen Kasten (24) umfasst, umfassend:
- einen Einlass (39), der dazu ausgebildet ist, einen Luftstrom, der als Frischluft bezeichnet wird, von der Belüftungsvorrichtung (5) aufzunehmen, und der als erster Einlass bezeichnet wird,
- einen Einlass (32), der dazu ausgebildet ist, einen Luftstrom, der als Umluft bezeichnet wird, von der Wärmebehandlungsvorrichtung (4) und/oder der Luftstrom-Reinigungsbehandlungsvorrichtung (11) aufzunehmen, und der als zweiter Einlass bezeichnet wird,
- eine Vielzahl von Mündungen (20), die jeweils dazu ausgebildet sind, mit einem jeweiligen Kanal (21) des Systems (1) verbunden zu werden, um einen Luftstrom in einen jeweiligen Bereich (3) des Raumes (2) zu leiten, wobei jede Mündung (20) mit wenigstens einem jeweiligen Bereich (3) des Raumes (2) verbunden ist,
wobei jede Mündung (20) umfasst:
- einen ersten Abschnitt (41), der mit dem ersten Einlass (39) fluidisch verbunden ist und einen ersten Luftauslass (43) bildet,
- einen zweiten Abschnitt (40), der mit dem zweiten Einlass (32) fluidisch verbunden ist und einen zweiten Luftauslass (42) bildet,
wobei das Element (6) ferner für jede der Mündungen (20) eine Vorrichtung (47) zur Regulierung einer Frischluftmenge umfasst, die als erste Regulierungsvorrichtung bezeichnet wird, die in dem ersten Luftauslass (43) angeordnet ist, wobei die erste Regulierungsvorrichtung (47) zwischen einer vollständig geschlossenen Position des ersten Luftauslasses (43) und einer vollständig geöffneten Position des ersten Luftauslasses (43) beweglich ist,
wobei das Verfahren die folgenden Schritte umfasst:
- Vergleichen eines Werts wenigstens eines Parameters, der als Parameterwert bezeichnet wird, der sich auf wenigstens einen Bestandteil einer Luft bezieht, mit einem gegebenen Wert, der als Vergleichswert bezeichnet wird, in jedem der Bereiche (3), wobei das Verfahren **dadurch gekennzeichnet ist, dass**, wenn ein Verhältnis des Parameterwerts zu dem Vergleichswert, das als Verunreinigungsverhältnis bezeichnet wird, in wenigstens einem der Bereiche (3), der als verunreinigter Bereich bezeichnet wird, größer oder gleich einem Wert gleich 1 ist, der als Einheitswert bezeichnet wird,
- die Frischluftmenge durch die erste Regulierungsvorrichtung (47) der Mündung (20), die mit dem wenigstens einen verunreinigten Bereich verbunden ist, erhöht wird, und/oder
- eine Umluftmenge, die durch die mit dem wenigstens einen verunreinigten Bereich verbundene Mündung (20) strömt, erhöht wird.

2. Verfahren nach dem vorhergehenden Anspruch, wobei der Schritt der Erhöhung der Umluftmenge eine Aktivierung einer Vorrichtung (44) zur Regulierung der Umluftmenge umfasst, die als zweite Regulierungsvorrichtung bezeichnet wird und in dem zweiten Luftauslass (42) angeordnet ist, wobei die zweite Regulierungsvorrichtung (44) zwischen einer vollständig geschlossenen Position des zweiten Luftauslasses (42) und einer vollständig geöffneten Position des zweiten Luftauslasses (42) beweglich ist.

3. Verfahren nach dem vorhergehenden Anspruch, wobei während des Schritts der Erhöhung der Umluftmenge, die durch die mit dem wenigstens einen verunreinigten Bereich verbundene Mündung (20) strömt, sich die zweite Regulierungsvorrichtung (44) der mit dem wenigstens einen verunreinigten Bereich verbundenen Mündung bewegt, um einen Querschnitt des zweiten Luftauslasses (42) der mit dem wenigstens einen verunreinigten Bereich verbundenen Mündung (20) zu vergrößern, und/oder sich die zweiten Regulierungsvorrichtungen (44) der nicht verunreinigten Bereiche bewegt, um einen Querschnitt der jeweiligen zweiten Luftauslässe (42) zu verkleinern.

4. Verfahren nach einem der vorhergehenden Ansprüche, wobei während des Schritts der Erhöhung der Frischluftmenge durch die erste Regulierungsvorrichtung (47) der Mündung (20), die mit dem wenigstens einen verunreinigten Bereich verbunden ist, die erste Regulierungsvorrichtung (47) des wenigstens einen verunreinigten Bereichs sich bewegt, um einen Querschnitt des ersten Luftauslasses (43) der Mündung (20), die dem wenigstens einen verunreinigten Bereich zugeordnet ist, zu vergrößern, und/oder die ersten Regulierungsvorrichtungen (47) der nicht verunreinigten Bereiche sich bewegen, um einen Querschnitt der jeweiligen ersten Luftauslässe (43) zu verringern.

5. Verfahren nach einem der vorhergehenden Ansprüche, wobei der Schritt des Erhöhens der Frischluftmenge durch die erste Regulierungsvorrichtung (47) der Mündung (20), die mit dem wenigstens einen verunreinigten Bereich verbunden ist, so lange dauert, bis das Verunreinigungsverhältnis in dem verunreinigten Bereich unter dem Einheitswert liegt.

6. Verfahren nach einem der vorhergehenden Ansprüche, wobei die Erhöhung der Umluftmenge und/oder die Erhöhung der Frischluftmenge mit dem Wert des Verunreinigungsverhältnisses verbunden ist.

7. Verfahren nach einem der vorhergehenden Ansprüche, wobei eine Frischluftmenge am Einlass des Regulierungselements (6), die als Gesamt-Frischluftmenge bezeichnet wird, konstant gehalten wird.

8. Verfahren nach einem der Ansprüche 1 bis 6, wobei eine Frischluftmenge am Einlass des Regulierungselements (6), die als Gesamt-Frischluftmenge bezeichnet wird, variabel ist.

9. Verfahren nach einem der vorhergehenden Ansprüche, wobei der wenigstens eine Luftbestandteil gewählt ist aus:
- einer oder mehreren anorganischen Verbindung(en), und/oder
- einer oder mehreren flüchtigen organische Verbindung(en), und/oder
- einer oder mehreren halbflüchtigen organischen Verbindung(en), und/oder
- Partikeln, und/oder
- Mikroorganismen, und/oder
- Wasserdampf in dem verunreinigten Bereich bei einer bestimmten Temperatur.

10. Verfahren nach einem der vorhergehenden Ansprüche, wobei, wenn das Verunreinigungsverhältnis für wenigstens zwei Luftbestandteile größer ist als der Einheitswert, eine Prioritätsreihenfolge zwischen den wenigstens zwei Luftbestandteilen festgelegt wird, wobei ein Wert der Erhöhung der Frischluftmenge und/oder der Umluftmenge von der Prioritätsreihenfolge abhängt.

11. Verfahren nach dem vorhergehenden Anspruch, wobei die Prioritätsreihenfolge in Abhängigkeit von einer absoluten Abweichung zwischen dem Verunreinigungsverhältnis und dem Einheitswert für jeden Luftbestandteil und/oder von einer Art jedes Luftbestandteils und/oder von einer Erfassung einer menschlichen Anwesenheit in dem verunreinigten Bereich festgelegt wird.

12. Verfahren nach einem der vorhergehenden Ansprüche, wobei der zweite Luftauslass (42) jeder Mündung (20) während definierter Zeitspannen eine Umluftmenge an den/die jeweiligen Bereich(e) (3) des Raums liefert.

## Claims

1. Method for controlling a system (1) for ventilation, heating, air conditioning and/or purification of several zones (3) of a premises (2), said system (1) comprising at least a member (6) for regulating an airflow and a device (4) for heat treatment of an airflow and/or a device (11) for purification treatment of an airflow circulating in said system (1), the system further comprising a ventilation device (5), the regulation member (6) including a box (24) comprising:
- an inlet (39) adapted to receive a flow of air, called fresh air, from the ventilation device (5), called first inlet,
- an inlet (32) adapted to receive a flow of air, called recirculated air, from the heat treatment device (4) and/or from the airflow purification treatment device (11), called second inlet,
- a plurality of nozzles (20) adapted to be each connected to a respective duct (21) of the system (1) to bring an airflow into a respective zone (3) of the premises (2), each nozzle (20) being associated with at least one respective zone (3) of the premises (2), each nozzle (20) comprising:
- a first portion (41) fluidly connected to the first inlet (39) and forming a first air outlet (43),
- a second portion (40) fluidly connected to the second inlet (32) and forming a second air outlet (42),
the member (6) further including, for each of the nozzles (20), a device (47) for regulating a flow rate of fresh air, called first regulation device, disposed in the first air outlet (43), the first regulation device (47) being movable between a position of total closing of the first air outlet (43) and a position of total opening of the first air outlet (43), the method comprising the following steps:
- comparing a value of at least one parameter, called parameter value, relating to at least one component of an air to a given value, called comparison value, in each of the zones (3),
the method being **characterised in that** if a ratio, called pollution ratio, of said parameter value to said comparison value is greater than or equal to a value equal to 1, called unit value, in at least one of the zones (3), called polluted zone,
- increasing of the flow rate of fresh air by said first regulation device (47) of the nozzle (20) associated with said at least one polluted zone, and/or
- increasing a flow rate of recirculated air passing through the nozzle (20) associated with said at least one polluted zone.

2. Method according to the preceding claim, wherein the step of increasing the flow rate of recirculated air comprises activating a device (44) for regulating the flow rate of recirculated air, called second regulation device, disposed in the second air outlet (42), the second regulation device (44) being movable between a position of total closing of the second air outlet (42) and a position of total opening of the second air outlet (42).

3. Method according to the preceding claim, wherein, during the step of increasing the flow rate of recirculated air passing through the nozzle (20) associated with said at least one polluted zone, the second regulation device (44) of said nozzle associated with said at least one polluted zone moves so as to increase a cross-section of the second air outlet (42) of said nozzle (20) associated with said at least one polluted zone, and/or the second regulation devices (44) of the non-polluted zones move so as to reduce a cross-section of the respective second air outlets (42).

4. Method according to one of the preceding claims, wherein, during the step of increasing of the flow rate of fresh air by said first regulation device (47) of the nozzle (20) associated with said at least one polluted zone, the first regulation device (47) of said at least one polluted zone moves so as to increase a cross-section of the first air outlet (43) of said nozzle (20) associated with said at least one polluted zone, and/or the first regulation devices (47) of the non-polluted zones move so as to reduce a cross-section of the respective first air outlets (43).

5. Method according to one of the preceding claims, wherein the step of increasing of the flow rate of fresh air by said first regulation device (47) of the nozzle (20) associated with said at least one polluted zone lasts until the pollution ratio is less than the unit value in the polluted zone.

6. Method according to one of the preceding claims, wherein the increase in the flow rate of recirculated air and/or the increase in the flow rate of fresh air is correlated with the value of the pollution ratio.

7. Method according to one of the preceding claims, wherein a flow rate of fresh air at the inlet of the regulation member (6), called overall fresh air flow rate, is maintained constant.

8. Method according to one of claims 1 to 6, wherein a flow rate of fresh air at the inlet of the regulation member (6), called overall fresh air flow rate, is variable.

9. Method according to one of the preceding claims, wherein said at least one component of the air is chosen from:
- one or more inorganic compound(s), and/or
- one or more volatile organic compound(s), and/or
- one or more semi-volatile organic compound(s), and/or
- particles, and/or
- microorganisms, and/or
- water vapour in the polluted zone at a given temperature.

10. Method according to any one of the preceding claims, wherein when the pollution ratio is greater than the unit value for at least two air components, an order of priority is established between the at least two air components, a value of the increase in the flow rate of fresh air and/or in the flow rate of recirculated air depending on said order of priority.

11. Method according to the preceding claim, wherein the order of priority is established according to an absolute difference between the pollution ratio and the unit value for each component of the air, and/or a nature of each component of the air, and/or a detection of a human presence in the polluted zone.

12. Method according to any one of the preceding claims, wherein the second air outlet (42) of each nozzle (20) provides a flow of recirculated air to the respective zone(s) (3) of the premises during defined time slots.
